(19) Europäisches Patentamt
European Patent Office
Office européen des brevets

(11) EP 0 909 871 A1

(12) EUROPÄISCHE PATENTANMELDUNG

(43) Veröffentlichungstag:
**21.04.1999 Patentblatt 1999/16**

(51) Int. Cl.[6]: **E21B 33/138**, E21B 43/25

(21) Anmeldenummer: **98116157.3**

(22) Anmeldetag: **27.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.10.1997 DE 19745736**

(71) Anmelder: **Wacker-Chemie GmbH**
**81737 München (DE)**

(72) Erfinder:
- **Burger, Willibald, Dr.**
  **84489 Burghausen (DE)**
- **Mayer, Hans, Dr.**
  **84489 Burghausen (DE)**
- **Schröck, Robert, Dr.**
  **84503 Altötting (DE)**
- **Wöltje, Holger**
  **84489 Burghausen (DE)**
- **Deubzer, Bernward, Dr.**
  **84489 Burghausen (DE)**
- **Lautenschlager, Hans, Dr.**
  **Greer, SC 29650 (US)**

(74) Vertreter:
**Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(54) **Verfahren zur Behandlung von wasserhaltigen Erdgas- und Erdgasspeicherbohrungen**

(57) Der Gasfluß in wasserhaltigen Erdgas- und Erdgasspeicherbohrungen wird verbessert, wenn eine homogene Phase, enthaltend einen wasserabweisenden, solvolysebeständigen Wirkstoff, in das wasserführende Gestein injiziert wird.

EP 0 909 871 A1

**Beschreibung**

Die Erfindung betrifft ein Verfahren zur Behandlung von wasserhaltigen Erdgas- und Erdgasspeicherbohrungen, bei dem eine homogene Phase, enthaltend einen wasserabweisenden, solvolysebeständigen Wirkstoff, injiziert wird.

Erdgaslagerstätten und Erdgasspeicher sind in natürlichen, unterirdischen Hohlräumen des Gesteins und Erdgasspeicher auch in künstlichen Hohlräumen anzutreffen. Die genannten Gesteine sind von ihrer Herkunft entweder Sedimentgesteine oder Evaporite. Diese Gesteine sind niemals trocken, sondern stehen meist in Verbindung mit Schichtwässern, gegebenenfalls sogar mit ausgedehnten Aquiferen. Wasser, insbesondere in Form von Salzlösungen, tritt daher sowohl beim Niederbringen einer Bohrung, beim Zementieren der Verrohrung und in der Produktionsphase von Gaslagerstätten auf. Das Austrocknen wasserhaltiger Zonen und das Blockieren des Wasserzuflusses in Förderbohrungen ist aus wirtschaftlichen Gründen notwendig, um einen kontinuierlichen Gasfluß aufrecht zu erhalten und die mit hohen Kosten verbundene Beseitigung des geförderten Wassers zu vermeiden oder zu verringern.

Ein besonderer Fall sind Gaslagerstätten oder -speicher, in denen der Schichtdruck bereits deutlich unter den hydrostatischen Druck abgesunken ist. Schichtwasser kann in eine Bohrung nur eindringen, wenn die Wassersättigung im Umfeld der Bohrung groß genug ist, um einen kontinuierlichen Fluß sicherzustellen, und die Wasserphase genügend Expansionsenergie aufweist und/oder vom Gas mitgenommen wird. Durch die höhere Wassersättigung im Porenraum wachsen die Druckverluste beim Fließen der Gasphase, und der Fließdruck auf der Bohrlochsohle sinkt, wobei die Wassersäule im Bohrloch anwachsen kann. Wenn der Bohrlochfließdruck nicht mehr ausreicht, tritt eine Phase diskontinuierlicher Gasförderung mit verminderten Zuflußmengen ein.

Die Reduktion des Wasserzuflusses in Produktionsbohrungen kann durch zwei Methoden bewirkt werden, nämlich durch selektives Blockieren und Verstopfen.

In den verschiedenen Verfahrensvarianten für das Abdichten von Wasserzuflüssen in Bohrungen und bei der Zementation werden in der Regel verstopfende Substanzen eingesetzt.

Beispielsweise ist im Derwent Abstract der SU 1315602 die Verwendung einer Mischung aus Tetrabutoxytitan mit geringerem Anteil an Tetrabutoxysilan oder Tetraethoxysilan zur Verstopfung von Bohrungen gegen Wassereinbruch beschrieben. Im Derwent Abstract der SU 1838587 ist der Einsatz von Ethylsilikaten zur Abdichtung von Öl- und Gasbohrungen gegen durchsickerndes Wasser beschrieben. In beiden Fällen wird auch die Gasdurchlässigkeit stark reduziert.

Weitere zur Verstopfung eingesetzte Substanzen sind Zemente, guellfähige Tone, Epoxydharze mit Faserzusätzen - insbesondere bei klüftigen Gesteinen, Gele, Suspensionen mit Zusätzen und feinteiliges Siliciumdioxid.

Fur das Verstopfen von Wasserzuflüssen müssen diese eingrenzbar sein, damit die ührigen produktiven Zonen des Gesteins nicht in Mitleidenschaft gezogen werden. Verstopfende Wirkung können Gele aus polymeren Lösungen von Polyacrylamid, Copolymerisaten und von Biopolymeren ausüben, aber auch Silikagele werden in einigen Anwendungen benannt. Die Vergelung der polymeren Lösung wird durch Beimischung oder Nachflutung vernetzender Substanzen bewirkt. Eine andere Möglichkeit, um verstopfende Wirkungen auszuüben, sind Ausfällungen anorganischer Salze oder organischer Polymere aus wässrigen oder nichtwässrigen Lösungsmitteln.

Für das selektive Blockieren der Wasserzuflüsse über der gesamten Mächtigkeit der kohlenwasserstoffführenden Schichten brauchen keine Vorkehrungen für die Auswahl der Wasserzutrittsstellen getroffen werden. Das selektive Blockieren geschieht nach zwei Verfahrensvarianten, nämlich durch Adsorp-tion hydrophiler Polymere oder durch Hydrophobierung der Gesteinsoberflächen.

Die hydrophilen Adsorptionsschichten bewirken eine Erhöhung des Fließwiderstandes für das nachfließende Wasser, der oftmals durch Quellung der Adsorptionsschicht verstärkt wird. Für die Kohlenwasserstoffphase besteht hingegen keine wesentliche Verminderung in der Durchlässigkeit. Beim Hydrophobieren wirkt die Grenzflächenspannung teilweise für das eindringende Wasser in Form des kapillaren Gegendruckes blockierend.

Für das selektive Blockieren werden meist hochmolekulare Polymere auf der Basis von Polyacrylamid (auch in kationischer Form), Copolymere, Terpolymere und Biopolymere eingesetzt. Für das Hydrophobieren der Gesteinsoberflächen sind unter anderem auch Silane erprobt worden.

Der Fließwiderstand der blockierten Gesteinsformation muß ausreichend sein, um das Wasser am Zutritt zum Produktionsbohrloch zu hindern. Der Fließwiderstand kann jedoch nicht beliebig erhöht werden, da die zur Blockierung injizierten Flüssigkeiten sich zur Entfaltung ihrer Blockierungswirkung im Gestein verteilen müssen und das Gas danach seine Fließwege durch Verdrängen der überschüssigen, nicht absorbierten Behandlungsflüssigkeit freispülen muß. Insbesondere bei einer geringen Gesteinspermeabilität darf der Fließwiderstand nicht zu hoch sein, weil sonst die Behandlungsflüssigkeit nicht injizierbar ist und das Gas den Behandlungsring nicht zu penetrieren vermag. Es findet somit Verstopfen statt Blockieren statt.

Ein weiterer besonderer Fall sind Gaslagerstätten, in denen das Wasser stark salzhaltig ist. Dort bewirkt das Verdampfen von Wasser in der Nähe des Bohrloches eine Überschreitung der Löslichkeitsgrenze; insbesondere chloridische Salze kristallisieren aus. Da über Kapillarkräfte ständig Salzwasser in die Porenräume gezogen wird, wachsen

die Salzkristalle stetig, bis die Fließkanäle bis zur Undurchlässigkeit von Erdgas verschlossen sind.

Das gängige Verfahren, die Produktivität von Erdgasbohrungen zu verbessern, besteht in der hydraulischen Erzeugung und der Stabilisierung von Rissen in der Umgebung des Bohrloches. Die dadurch erzeugten zusätzlichen Drainageflächen und die hohe Gas-Flußdichte in den Rissen führt zu einer erhöhten Förderrate der Bohrung. Dieses Verfahren ist jedoch sehr teuer. Die Rissbildung kann nur sehr begrenzt kontrolliert werden.

Die Salzablagerungen, insbesondere chloridische Salze, können durch Spülungen mit Süßwasser beseitigt werden. Da sich die Salzablagerungen immer wieder neu bilden, müssen diese Spülungen regelmäßig durchgeführt werden, wodurch häufige Produktionsausfälle entstehen.

Es bestand daher die Aufgabe, ein Mittel bereitzustellen, das den Gasfluß in wasserhaltigen Erdgas- und Erdgasspeicherbohrungen dauerhaft verbessert.

Die Erfindung betrifft ein Verfahren zur Behandlung von wasserhaltigen Erdgas- und Erdgasspeicherbohrungen, bei dem eine homogene Phase, enthaltend einen wasserabweisenden, solvolysebeständigen Wirkstoff, in das wasserführende Gestein injiziert wird.

Vorzugsweise wird die homogene Phase mittels einer Bohrung in das wasserführende Gestein injiziert. Dabei adsorbiert oder reagiert der Wirkstoff an der Gesteinsoberfläche. Überschüssige homogene Phase wird vorzugsweise durch Nachpressen von Gas im Umfeld der Bohrung verteilt. Als Gas kann hierzu beispielsweise Luft, Stickstoff oder vorzugsweise Erdgas eingesetzt werden.

Die homogene Phase weist eine gute Verteilbarkeit im Gestein der erdgashaltigen Lagerstätten und chemische Inaktivität gegenüber dem Erdgas und den Fördereinrichtungen auf.

Durch die selektive Adsorption von wasserabweisendem Wirkstoff wird der Fließwiderstand im Gestein für Wasser stark erhöht, der für Gas erniedrigt. Der Wasserzufluß wird demzufolge reduziert und Erdgas kann besser fließen. Erdgas löst sich kaum im Wirkstoff und kann, wenn keine überschüssige homogene Phase die Fließwege verlegt, weitgehend ungehindert zur Förderbohrung durchfließen. Durch die oberflächenglättende Wirkung der Adsorptionsschicht werden die Reibungsdrücke für injiziertes und gefördertes Gas herabgesetzt. Eine erhöhte Förderrate für Erdgas am Bohrloch ist die Folge.

Daneben wird in hydrophobierten Gesteinszonen, in die kein Wasser nachfließt, die kapillare Saugwirkung für Wasser stark herabgesetzt, und der behandelte Bereich trocknet allmählich durch Verdampfung des Wassers aus.

Durch die Austrocknung des Gesteins in der Umgebung der Bohrung werden das Verstopfen der Kapillaren des Gesteins sowie Salzablagerungen auf Einrichtungen zur Förderung, Lagerung und Weiterverarbeitung vermieden.

Da bei gleichem Kapillardruck die Wassersättigung in niedrigpermeablem Gestein mit engen Kapillaren größer ist als in höherpermeablem Gestein, ist das Verfahren für Lagerstätten mit niedriger Permeabilität, wo heterogene Systeme nicht mehr injizierbar sind und es zu Verstopfungen der Poren in der Erdgaslagerstätte kommen kann, besonders geeignet. Das Verfahren kann bei Gesteinspermeabilitäten von vorzugsweise mindestens 0,0001 $\mu m^2$ durchgeführt werden. Zudem führt die Anwendung bei heterogenem Lagerstättengestein mit unterschiedlicher Permeabilität zu einer Homogenisierung des Fließprofils in Bohrlochnähe.

Da der wasserabweisende Wirkstoff solvolysebeständig ist, kann die homogene Phase wesentlich leichter gehandhabt werden als solvolysierende Wirkstoffe aufweisende homogene Phasen, und es ist immer gewährleistet, daß der Wirkstoff in der injizierten Form zur Anwendung kommt. Es besteht somit keine Gefahr, daß die homogene Phase durch Solvolyse vor Eintreffen am Wirkort zu einer heterogenen Phase wird, die dann Ausfällungen oder Verstopfungen im Bohrloch oder im Gestein in der Nähe des Bohrlochs verursachen kann. Am Wirkort selbst darf die homogene Phase zur heterogenen Phase werden. Beispielsweise können wässrige Methylsiliconatlösungen eingesetzt werden, die mit $CO_2$ wasserabweisende und nicht wasserlösliche Wirkstoffe bilden.

Der wasserabweisende Wirkstoff hat die Eigenschaft, am Wirkort nicht in Wasser einzudringen und nicht darin zu verbleiben. Der wasserabweisende Wirkstoff ist am Wirkort vorzugsweise zu höchstens 1 Gew.-%, insbesondere zu höchstens 0,1 Gew.-% in Wasser bei 20°C löslich.

Im erfindungsgemäßen Verfahren können als wasserabweisende Stoffe beispielsweise gegebenenfalls fluorierte Wachse, Paraffine, Carbonsäuresalze, organische oder siliziumorganische monomere oder polymere Verbindungen eingesetzt werden.

Als Wachse sind beispielsweise geeignet natürliche Wachse, wie pflanzliche Wachse, z.B. Candellila- und Carnaubawachs; tierische Wachse, z.B. Bienenwachs und Lanolin; Mineralwachse, z.B. Ceresin und Ozokerit; chemisch modifizierte natürliche, insbesondere fluorierte Wachse und synthetische Wachse, z.B. Polyethylenwachse und Siliconwachse.

Als Carbonsäuresalze eignen sich insbesondere die Salze von ein- oder mehrwertigen Carbonsäuren mit 8 bis 50 Kohlenstoffatomen pro Carboxylgruppe. Bevorzugt sind die Salze von fluorierten Carbonsäuren, insbesondere wenn diese einen Perfluoralkylrest mit mindestens 4 Kohlenstoffatomen aufweisen. Beispiele für bevorzugte einwertige, fluorierte Carbonsäuresalze sind die Alkalimetallsalze von Arylcarbonsäuren, wie Benzoesäuren oder Naphthoesäuren mit einem oder zwei Perfluoralkylresten mit vorzugsweise 4 bis 18 Kohlenstoffatomen.

Als fluorierte organische polymere Verbindungen können im erfindungsgemäßen Verfahren beispielsweise alle

derartigen Verbindungen eingesetzt werden, die auch bisher zum Wasserabweisendmachen von organischen Stoffen, wie organischen Fasern, und anorganischen Stoffen verwendet werden konnten oder verwendet wurden. Beispiele für derartige Verbindungen sind aus mindestens zum Teil fluorhaltigen Monomeren hergestellte Polymere, wie Polytetrafluorethylen, Copolymere aus Tetrafluorethylen und Hexafluorpropylen, Polyvinylfluorid, Polyvinylidenfluorid, Polytrifluorchlorethylen, Copolymere aus Trifluorchlorethylen und anderen Monomeren, wie Vinylidenfluorid, Vinylchlorid, Vinylacetat, Methacrylsäuremethylester oder Styrol; und fluorierte Acrylharze, wie Homo- und Copolymere von Perfluoralkylgruppen enthaltenden Acrylsäure- und Methacrylsäureestern mit Acrylsäure und methacrylsäure und deren Derivaten.

Bevorzugte Beispiele für fluorierte Acrylharze sind Poly-1,1-dihydroperfluorbutylacrylat und Mischpolymerisate aus n-Butylacrylat, N-Methylolacrylamid und mindestens 35 Gew.-% 1,1,2,2,-Tetrahydroperfluor-$C_1$-bis $C_{16}$-alkylmethacrylat mit linearer Alkylkette.

Weitere Beispiele für solche fluorierten Acrylharze sind die Alkalimetallsalze der Copolymere aus den vorstehend aufgeführten Acrylaten, Methacrylaten, Acrylsäure und Methacrylsäure, die vorzugsweise einen Fluorgehalt von mindestens 20 Gew.-% aufweisen.

Weitere Beispiele für fluorierte organische polymere Verbindungen sind nach der Polymerisation fluorierte organische synthetische Polymere, wie Polyvinylchlorid, Polyethylen, Polypropylen, Polyvinylacetat, Polyvinylalkohol, Polycarbonat, Polyacrylat, Polymethacrylat, Polymethylmethacrylat, Polystyrol, Polyacrylnitril, Polyvinylidenchlorid, Polyvinylfluorid, Polyvinylidenfluorid, Polyvinylidencyanid, Polybutadien, Polyisopren, Polyether, Polyester, Polyamid, Polyurethan, Polyimid, Silikone, Polyvinylpyrrolidon, Polyacrylamid, Polyethylenglykol und deren Derivate, die in den Seitenketten oder in den Hauptketten fluoriert sind. Die nach der Polymerisation fluorierten Polymere weisen vorzugsweise einen Fluorgehalt von mindestens 10 Gew.-% auf. Besonders bevorzugt sind Polyurethanharze mit einem Fluorgehalt von 25-35 Gew.-%.

Insbesondere bevorzugt als wasserabweisender Wirkstoff sind Organosiliciumverbindungen, da diese temperaturstabil bei häufig in Lagerstätten vorherrschenden Temperaturen von 130°C und wesentlich darüber sind. Die hydrophobierende Wirkung auf die Gesteinsoberfläche bleibt lange erhalten.

Beispiele für Organosiliciumverbindungen sind Organosiliciumverbindungen, die Einheiten der allgemeinen Formel I

$$A_aR_bSiX_cO\ [4-(a+b+c)]/2 \qquad (I),$$

enthalten, wobei

**R** ein Wasserstoffatom oder einen einwertigen, zweiwertigen oder dreiwertigen Kohlenwasserstoffrest mit 1 bis 200 Kohlenstoffatomen, der mit Halogen-, Amin-, Ammonium-, Mercapto-, Acrylat- oder Maleinimidgruppen substituiert sein kann,

**X** ein Chloratom, einen Rest der Formel $-O^-$, wobei als Ausgleich der Ladungen Protonen und/oder organische bzw. anorganische ionische Substanzen vorhanden sein können, einen Rest der allgemeinen Formel $-OR^1$ oder einen Rest der allgemeinen Formel II

$$-(R^2{}_h\text{-}[OCH(CH_3)CH_2]_e[OCH_2CH_2]_f[O(CH_2)_4]_gOR^3 \qquad (II),$$

wobei

**$R^1$** ein Wasserstoffatom oder einen Kohlenwasserstoffrest mit 1 bis 200 Kohlenstoffatomen, der durch ein oder mehrere gleiche oder verschiedene Heteroatome, die ausgewählt werden aus O, S, N und P, unterbrochen sein kann,

**$R^2$** einen zweiwertigen Kohlenwasserstoffrest mit 1 bis 200 Kohlenstoffatomen, der durch ein oder mehrere Gruppen der Formeln -C(O)-, -C(O)O-, $-C(O)NR^1$, $-NR^1-$, $-N^+HR^1-$, -O-, -S- unterbrochen und/oder mit F, Cl oder Br substituiert sein kann,

**$R^3$** eine Bedeutung von **$R^1$** haben kann, oder einen Rest der Formeln $-C(O)R^1$ oder $-Si(R^1)_3$,

**A** einen Rest der allgemeinen Formel IV

$$-\ R^4(B)_z \qquad (IV),$$

wobei

**$R^4$** einen zwei- drei- oder viervertigen Kohlenwasserstoffrest mit 1 bis 200 Kohlenstoffatomen je Rest, der durch ein oder mehrere Gruppen der Formeln -C(O)-, -C(O)O-, $-C(O)NR^5$, $-NR^5-$, $-N^+HR^5-$, $-N^+R^5R^5-$, -O-, -S-, -(HO)P(O)- oder -(NaO)P(O)- unterbrochen und/oder mit F, Cl oder Br substituiert sein kann, wobei

**$R^5$** ein Wasserstoffatom oder einen Kohlenwasserstoffrest mit 1 bis 200 Kohlenstoffatomen je Rest, der durch ein oder mehrere Gruppen der Formeln -C(O)-, -C(O)O-, -C(O)NR$^5$-, -NR$^5$-, -N$^+$HR$^5$-, -N$^+$R$^5$R$^5$-, -O- oder -S- unterbrochen und/oder mit F, Cl oder Br substituiert sein kann,

**B** eine Bedeutung von **$R^5$** haben kann oder einen Rest, der ausgewählt wird aus -COO$^-$, -SO$_3^-$, -OPO$_3$H$_y^{(2-y)}$-, -N$^+$R$^5$R$^5$R$^5$, -P$^+$R$^5$R$^5$R$^5$, -NR$^5$R$^5$, -OH, -SH, F, Cl, Br, -C(O)H, -COOH, -SO$_3$H, -C$_6$H$_4$-OH und -C$_m$F$_{2m+1}$,

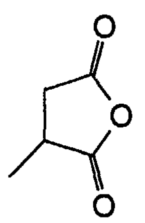
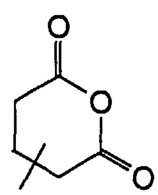
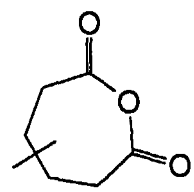

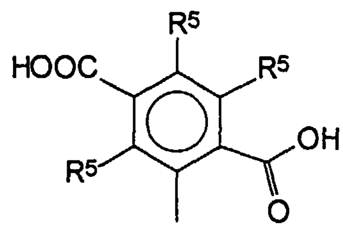

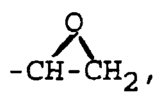

$-C(O)-CR^1=CH_2$, $-O-C(O)-CR^1=CH_2$, $-C_6H_4-(CH_2)_xCR^1=CH_2$,

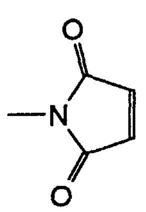
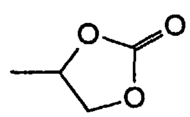
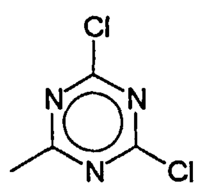

**x** eine ganze Zahl von 1-20,
**y** die Werte 0 oder 1,
**z** je nach Wertigkeit von **$R^4$** die Werte 1, 2-oder 3,
**h** die Werte 0 oder 1,
**m** eine ganze Zahl von 1-20,
**a, b und c** jeweils die Werte 0, 1, 2 oder 3, und die Summe **a + b + c** < 4 und
**e, f und g** jeweils eine ganze Zahl von 0-200 bedeuten, mit der Maßgabe, daß die Summe **e + f + g** > 1 ist.

Als Ausgleich der Ladungen in den Resten **A, R** und **X** können gegebenenfalls Protonen und/oder organische bzw. anorganische ionische Substanzen vorhanden sein, wie z.B. Alkalimetall-, Erdalkalimetall-, Ammonium-Ionen, Halogenid-, Sulfat-, Phosphat-, Carboxylat-, Sulfonat-, Phosphonat-Ionen.

Weiterhin können die Organosiliciumverbindungen gegebenenfalls Einheiten der allgemeinen Formeln (V) und (VI) enthalten,

$$O_{(4-i-k-1)/2}R_iX_kSi\text{-}A^1\text{-}SiX_kR_iO_{(4-i-k-1)/2} \quad (V),$$

$$O_{(4-i-k-1)/2}R_iX_kSi\text{-}\underset{\displaystyle SiX_kR_iO_{(4-i-k-1)/2}}{A^2}\text{-}SiX_kR_iO_{(4-i-k-1)/2} \quad (VI),$$

wobei

- **$A^2$** einen dreiwertigen Kohlenwasserstoffrest mit 1 bis 200 Kohlenstoffatomen bedeutet, der durch Reste der Formeln -C(O)-, -C(O)O-, -C(O)NR$^5$, -NR$^5$-, -N$^+$HR$^5$-, -N$^+$R$^5$R$^5$-, -O-, -S-, -N- oder -N$^+$R$^5$- unterbrochen und/oder mit F, Cl oder Br substituiert sein kann,
- **$A^1$** einen zweiwertigen Rest **$R^2$** darstellt,
- **i** und **k** jeweils die Werte 0, 1, 2 oder 3 bedeuten, mit der Maßgabe **i** + **k** $\leq$ 3 und
- **R** und **X** die oben angegebenen Bedeutungen haben.

Die vorstehend aufgeführten Kohlenwasserstoffreste **R**, **$R^1$**, **$R^2$**, **$R^3$**, **$R^4$**, **$R^5$**, **$A^1$** und **$A^2$** können gesättigt, ungesättigt, linear, cyclisch, aromatisch oder nichtaromatisch sein.

Beispiele für Kohlenwasserstoffreste **R** sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Arylreste, wie der Phenyl-, Naphthyl-, Anthryl - und Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest.

Bevorzugt sind das Wasserstoffatom oder der Methyl-, Ethyl-, Octyl- und Phenylrest, besonders bevorzugt sind das Wasserstoffatom oder der Methyl-und Ethylrest.

Beispiele für halogenierte Reste **R** sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Rest **$R^1$** sind die für Rest **R** gleich Alkylreste angegebenen Beispiele sowie der Methoxyethyl- und der Ethoxyethylrest, wobei es sich bei Rest **$R^1$** bevorzugt um Alkylreste mit 1 bis 50 Kohlenstoffatomen, die durch Sauerstoffatome unterbrochen sein können, besonders bevorzugt um den Methyl- und den Ethylrest handelt.

Beispiele für organische oder anorganische Substanzen zum Ausgleich der Ladungen für X = -O$^-$ sind, Alkali- und Erdalkaliionen, Ammonium- und Phosphoniumionen sowie ein- zwei- oder dreiwertige Metallionen, bevorzugt sind Alkaliionen, besonders bevorzugt $Na^+$ und $K^+$.

Beispiele für Reste X sind der Methoxy- bzw. der Ethoxyrest und der allgemeinen Formel (II), wie

$-(CH_2)_3-(OCH_2CH_2)_3-OCH_3$, $-(CH_2)_3-(OCH_2CH_2)_6-OCH_3$,
$-(CH_2)_3-(OCH_2CH_2)_{35}-OCH_3$,
$-(CH_2)_3-(OCH(CH_3)CH_2)_3-OCH_3$, $-(CH_2)_3-(OCH(CH_3)CH_2)_6-OCH_3$,
$-(CH_2)_3-(OCH(CH_3)CH_2)_{35}-OCH_3$,
$-(CH_2)_3-(OCH_2CH_2)_3-(OCH(CH_3)CH_2)_3-OCH_3$,
$-(CH_2)_3-(OCH_2CH_2)_6-(OCH(CH_3)CH_2)_6-OCH_3$,
$-(CH_2)_3-(OCH_2CH_2)_{35}-(OCH(CH_3)CH_2)_{35}-OCH_3$,
$-(CH_2)_3-(OCH_2CH_2)_3-OSi(CH_3)_3$,$-(CH_2)_3-(OCH_2CH_2)_6-OSi(CH_3)_3$,
$-(CH_2)_3-(OCH_2CH_2)_{35}-OSi(CH_3)_3$,
$-(CH_2)_3-(OCH_2CH_2)_3-OC(O)CH_3$, $-(CH_2)_3-(OCH_2CH_2)_6-OC(O)CH_3$,
$-(CH_2)_3-(OCH_2CH_2)_{35}-OC(O)CH_3$,
$-(OCH_2CH_2)_3-OH$, $-(OCH_2CH_2)_6-OH$, $-(OCH_2CH_2)_{35}-OH$,
$-(OCH(CH_3)CH_2)_3-OH$, $-(OCH(CH_3)CH_2)_6-OH$,
$-(OCH(CH_3)CH_2)_{35}-OH$, $-(OCH_2CH_2)_3-(OCH(CH_3)CH_2)_3-OH$,
$-(OCH_2CH_2)_6-(OCH(CH_3)CH_2)_6-OH$,
$-(OCH_2CH_2)_{35}-(OCH(CH_3)CH_2)_{35}-OH$;
$-(OCH_2CH_2)_{18}-(O(CH_2)_4)_{18}-OH$
$-(OCH_2CH_2)_3-OCH_3$, $-(OCH_2CH_2)_6-OCH_3$, $-(OCH_2CH_2)_{35}-OCH_3$,

$-(OCH(CH_3)CH_2)_3-OCH_3$, $-(OCH(CH_3)CH_2)_6-OCH_3$,
$-(OCH(CH_3)CH_2)_{35}-OCH_3$, $-(OCH_2CH_2)_3-(OCH(CH_3)CH_2)_3-OCH_3$,
$-(OCH_2CH_2)_6-(OCH(CH_3)CH_2)_6-OCH_3$,
$-(OCH_2CH_2)_{35}-(OCH(CH_3)CH_2)_{35}-OCH_3$,
$-(OCH_2CH_2)_3-OSi(CH_3)_3$, $-(OCH_2CH_2)_6-Osi(CH_3)_3$,
$-(OCH_2CH_2)_{35}-OSi(CH_3)_3$,
$-(OCH_2CH_2)_3-OC(O)CH_3$, $-(OCH_2CH_2)_6-OC(O)CH_3$,
$-(OCH_2CH_2)_{35}-OC(O)CH_3$,
$-(OCH_2CH_2)_3-OH$, $-(OCH_2CH_2)_6-OH$, $-(OCH_2CH_2)_{35}-OH$,
$-(OCH(CH_3)CH_2)_3-OH$, $-(OCH(CH_3)CH_2)_6-OH$,
$-(OCH(CH_3)CH_2)_{35}-OH$, $-(OCH_2CH_2)_3-(OCH(CH_3)CH_2)_3-OH$,
$-(OCH_2CH_2)_6-(OCH(CH_3)CH_2)_6-OH$,
$-(OCH_2CH_2)_{35}-(OCH(CH_3)CH_2)_{35}-OH$ und
$-(OCH_2CH_2)_{18}-(O(CH_2)_4)_{18}-OH$.

Beispiele für Reste $\mathbf{R^2}$ sind lineare oder Verzweigte, substituierte oder unsubstituierte Kohlenwasserstoffreste mit Vorzugsweise 2 bis 10 Kohlenstoffatomen, wobei gesättigte oder ungesättigte Alkylenreste bevorzugt sind und der` Ethylen- oder der Propylenrest besonders bevorzugt sind.

Beispiele für Reste $\mathbf{R^3}$ sind die für **R** gleich Alkylrest oder Arylrest angegebenen Beispiele und Reste der Formel $-C(O)R^1$oder $-Si(R^1)_3$, wobei der Methyl-, Ethyl-, Propyl- und Butyl- sowie Trialkylsilyl- und -C(O)-Alkylrest bevorzugt und der Methyl, Butyl -, $-C(O)-CH_3$ und der Trimethylsilylrest besonders bevorzugt sind.

Beispiele für $\mathbf{R^4}$ sind Reste der Formeln

$-(CH_2)_3-$
$-(CH_2)_3-O-CH_2-$
$-(CH_2)_3-O-(CH_2CH_2O)n-$
$-(CH_2)_3-O-CH_2-CH(OH)-CH_2-$
$-(CH_2)_3-NH-(CH_2)_2-$
$-(CH_2)_3-NH-C(O)-$
$-(CH_2)_3-NH-(CH_2)_2-C(O)-O-$
$-(CH_2)_3-NH-(CH_2)_2-C(O)-O-(CH_2)_2-$
$-(CH_2)_3-NH-(CH_2)_2-NH-C(O)-CH=CH-$
$-(CH_2)_3-NH-C(O)-CH=CH-$
$-(CH_2)_3-C_6H_4-$

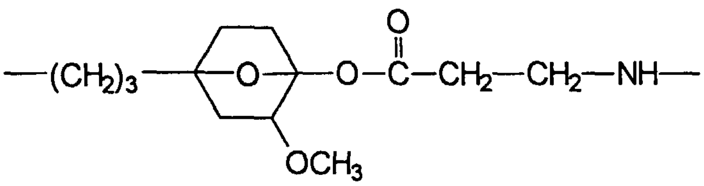

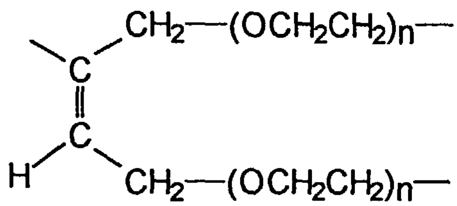

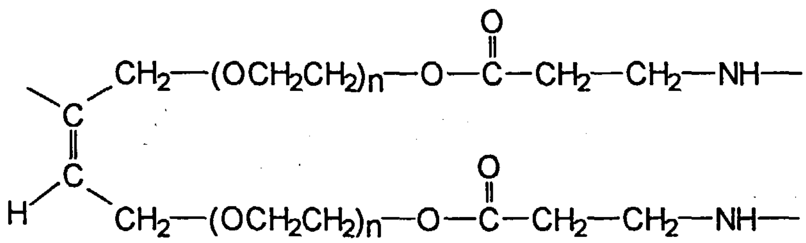

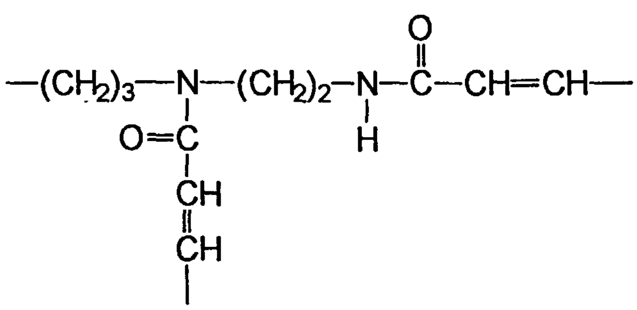

Bevorzugt für $\mathbf{R^4}$ sind Reste der Formel

$-(CH_2)_3-$
$-(CH_2)_3-NH-(CH_2)_2-$
$-(CH_2)_3-O-CH_2-CH(OH)-CH_2-$

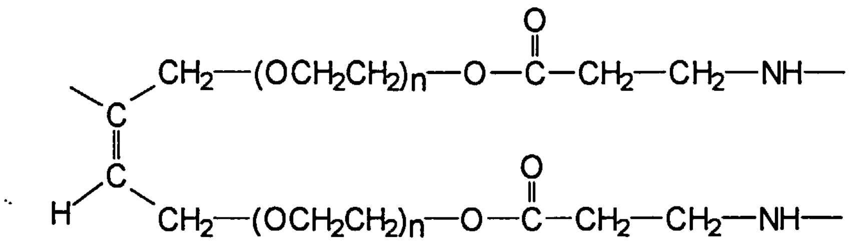

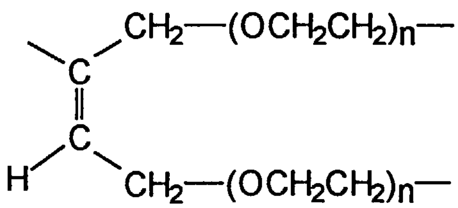

Besonders bevorzugt als **R**$^4$ sind $-(CH_2)_3-$ und

$-(CH_2)_3-NH-(CH_2)_2-$.

Beispiele für **R**$^5$ sind die vorstehend bei **R** aufgeführten Alkyl- und Arylreste und Reste der Formeln

$-C(O)-CH_3$
$-(CH_2CH_2O)_3-CH_3$, $-(CH_2CH_2O)_6-CH_3$, $-(CH_2CH_2O)_{35}-CH_3$,
$-(CH(CH_3)CH_2O)_3-CH_3$, $-(CH(CH_3)CH_2O)_6-CH_3$,
$-(CH(CH_3)CH_2O)_{35}-CH_3$, $-(CH_2CH_2O)_3-(CH(CH_3)CH_2O)_3-CH_3$,
$-(CH_2CH_2O)_5-(CH_2-CH(CH_3)O)_5-CH_3$,
$-(CH_2CH_2O)_{10}-(CH_2-CH(CH_3)O)_{10}-CH_3$,
$-(CH_2CH_2O)_3-Si(CH_3)_3$, $-(CH_2CH_2O)_6-Si(CH_3)_3$,
$-(CH_2CH_2O)_{35}-Si(CH_3)_3$,
$-(CH_2CH_2O)_5-$ $(CH_2-CH(CH_3)O)_5-Si(CH_3)_3$,
$-(CH_2CH_2O)_{10}-$ $(CH_2-CH(CH_3)O)_{10}-Si(CH_3)_3$,
$-(CH_2CH_2O)_3-C(O)CH_3$, $-(CH_2CH_2O)_6-C(O)CH_3$,
$-(CH_2CH_2O)_{35}-C(O)CH_3$,
$-(CH_2CH_2O)_5-(CH_2-CH(CH_3)O)_5-C(O)CH_3$,
$-(CH_2CH_2O)_{10}-(CH_2-CH(CH_3)O)_{10}-C(O)CH_3$,
$-(CH_2CH_2O)_3-H$, $-(CH_2CH_2O)_6-H$, $-(CH_2CH_2O)_{35}-H$,
$-(CH(CH_3)CH_2O)_3-H$, $-(CH(CH_3)CH_2O)_6-H$,
$-(CH(CH_3)CH_2O)_{35}-H$, $-(CH_2CH_2O)_3-(CH(CH_3)CH_2O)_3-H$,
$-(CH_2CH_2O)_5-(CH_2-CH(CH_3)O)_5-H$,
$-(CH_2CH_2O)_{10}-(CH_2-CH(CH_3)O)_{10}-H$ und
$-(CH_2CH_2O)_{18}-((CH_2)_4O)_{18}-H$.

Bevorzugt sind das Wasserstoffatom und die für **R** angegebenen Beispiele, besonders bevorzugt sind das Wasserstoffatom und Alkylreste.

Beispiele für Reste B sind -COONa, $-SO_3Na$, -COOH, -SH und insbesondere -OH, $-NH_2$, $-NH-CH_3$, $-NH-(C_6H_{11})$ und $-N-(CH_2-CH=CH_2)_2$ , wobei $-NH_2$, $-NH-CH_3$ und $-NH-(C_6H_{11})$ besonders bevorzugt sind.

Beispiele für **A**$^1$ sind lineare oder verzweigte, zweiwertige Alkylreste mit Vorzugsweise 2 bis 20 Kohlenstoffatomen, oder. Reste der Formeln

$-(CH_2)_3-NH-(CH_2)_3-$, $-(CH_2)_3-NR^5-(CH_2)_3-$
$-(CH_2)_3-(CH_2-CH_2O)_f-(CH_2)_3-$
$-O-(CH_2CH_2O)_f-$

Beispiele für $A^2$ ist

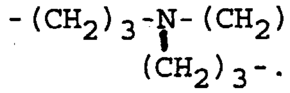

Der Wirkstoff ist solvolysebeständig, wenn er beim Lösungsvorgang in einem Lösungsmittel weder sich selbst noch das Lösungsmittel chemisch verändert, so daß Wirkstoff und Lösungsmittel durch physikalische Trennverfahren wie Destillation oder Kristallisation in der Originalgestalt wiedergewonnen werden können.

Die homogene Phase ist makroskopisch gesehen an allen Stellen gleich beschaffen. Für das Verfahren kommen die flüssige und gasförmige Phasen in Betracht.

Bevorzugt sind lösungsmittelfreie Wirkstoffe und homogene Lösungen aus mindestens einem wasserabweisenden Wirkstoff und mindestens einem Lösemittel.

Lösemittel sind vor allem Flüssigkeiten, die andere gasförmige, flüssige und feste Stoffe zu lösen vermögen. Geeignet sind alle anorganischen und organischen Lösemittel. Bei den anorganischen Lösemitteln sind sowohl protonenhaltige, wie z.B. $H_2O$ oder $HNO_3$, als auch protonenfreie, wie z.B. flüssiges $CO_2$ oder $SO_2$, geeignet. Von organischen Lösemitteln seien beispielhaft genannt die Alkohole, wie Methanol; Ethanol und Propanole; Glykole, wie Ethylenglykol; Ether und Glykolether, wie Tetrahydrofuran, Dioxan, Polyethylenglykolether; Ke-tone, wie Aceton; Ester, wie Essigsäureethylester; Amide und andere stickstoffhaltige Verbindungen, wie DMF, N-Methylpyrrolidon; schwefelhaltige Verbindungen, wie DMSO, Sulfolan; Nitro-Verbindungen, wie Nitrobenzol; Halogenkohlenwasserstoffe, wie Tri- oder Tetrachlorethan; und aromatische und aliphatische Kohlenwasserstoffe, wie Petrolether und Testbenzin.

Aber nicht nur die reinen Lösemittel, auch Gemische, die Lösungseigenschaften Vereinigen, sind geeignet. Bevorzugt sind Lösemittel, die bei 20 °C höchstens mit 2 Gew.-% Wasser mischbar sind, insbesondere Kohlenwasserstoffe.

Als Lösemittel für obige Organosiliciumverbindungen sind Was-ser, Kohlenwasserstoffe, Alkohole und organische sowie anorganische Säuren bevorzugt, insbesondere Wasser, Kohlenwasserstoffe und Essigsäure.

Als Zusatzstoffe neben Wirkstoff und Lösemittel kann die homogene Phase beispielsweise Fungizide, Bakterizide, Algicide, Biocide, Geruchsstoffe, Korrosionsinhibitoren, native Öle, Verdickungsmittel, Netzmittel und Katalysatoren enthalten.

In den nachfolgenden Beispielen, falls jeweils nicht anders angegeben,

a) sind alle Mengenangaben auf das Gewicht bezogen;
b) sind alle Drücke 0,1013 MPa (abs.);
c) sind alle Temperaturen 20° C;
d) wurden nachstehende Abkürzungen verwendet

| | |
|---|---|
| dem. | demineralisiert |
| T | Gewichtsteile |
| PDMS | Polydimethylsiloxan |
| Me | Methylrest; |
| Vn | Volumen bei Normbedingungen 0°C und 0,1013 MPa (abs.) |

e) wurde die Aminzahl als Anzahl der ml 1-n-HCl bezeichnet, die zum Neutralisieren von 1 g Organopolysiloxan erforderlich sind.

__Beispiele__

Die nachstehenden Beispiele 1 bis 5 zur Reduzierung der Kapillarkräfte und damit einhergehend zur Verhinderung von Salzaus-fällungen und zur Verbesserung des Gasflusses in den Kapillaren wurden an Probenkernen mit einer Gaspermeabilität von 0,45 bis 0,50 $\mu m^2$ aus trockenem Sandstein aus Fontainebleau, Frankreich durchgeführt. Die zylinderförmigen Probenkerne wiesen eine Länge von 4 cm und einen Durchmesser von 3 cm auf.

__Beispiele 1 bis 5__

Mit den Probenkernen wurden nachstehende Maßnahmen durchgeführt:

a) Die Probenkerne wurden bei 90°C über Nacht getrocknet.

b) Die trockenen Probenkerne wurden in einen vakuumfesten Behälter gestellt und der Behälter wurde evakuiert. Bei erreichtem Vakuum wurde der Behälter von der Vakuumpumpe durch Schließen eines Hahnes getrennt und dem. Wasser über einen zweiten Anschluß in den Behälter gesogen. Nachdem die Probenkerne vollständig im dem. Wasser eingetaucht waren, wurde der Behälter belüftet. Die Probenkerne wurden zur Bestimmung von $\mathbf{m_v}$ gewogen.

c) Die Probenkerne wurden bei 90°C Ober Nacht getrocknet und danach zur Bestimmung von $\mathbf{m_1}$ gewogen.

d) Die trockenen Probenkerne wurden in jeweils einen saugfähigen Filterpapierstreifen der Breite 7 cm und Länge 19,2 cm derart eingerollt, daß der Kern zweifach umwickelt war und das Papier an einer Seite ca. 4 cm überstand. Das Filterpapier wurde durch einen elastischen Latexschlauch an die Mantelfläche angepreßt. In wasserdampfgesättigter Umgebung wurde das überstehende Papier in dem. Wasser gestellt, so daß das Ende des Papiers in das Wasser eintauchte, der Kern sich aber oberhalb der Wasseroberfläche befand. Nach sieben Stunden wurde der Kern ausgewickelt und zur Bestimmung von $\mathbf{m_{F1}}$ gewogen.

e) Nach der Gleichung

$$Sw(Sp)_{ref} = \frac{m_{F1} - m_1}{m_v - m_1}$$

wurde der Referenzwert für dem. Wasser der spontanen Imbibition $\mathbf{Sw(sp)_{ref}}$ berechnet. Die spontane Imbibition beschreibt die Verdrangung der nichtbenetzenden Phase durch die benetzende Phase.

f) Die Probenkerne wurden bei 90°C über Nacht getrocknet.

g) Analog Maßnahme b) wurden die Probenkerne mit Organopolysi-loxanlösung getränkt, welche Organopolysiloxane als hydrophobierenden Wirkstoff in 5%iger Konzentration enthielten. Zur Beseitigung eines Überschusses wurden die Kerne mit Stickstoff ausgeblasen.

h) Die Probenkerne wurden 17 h bei 90°C getrocknet und zur Bestimmung von $\mathbf{m_2}$ gewogen.

i) Analog Maßnahme d) wurden die trockenen Probenkerne in Filterpapierstreifen gewickelt und in dem. Wasser gestellt. Nach sieben Stunden wurde der Kern ausgewickelt und zur Be-Stimmung von $\mathbf{m_{F2}}$ gewogen.

j) Nach der Gleichung

$$Sw(sp)_1 = \frac{m_{F2} - m_2}{m_v - m_1}$$

wurde die spontane Imbibition $\mathbf{Sw(sp)_1}$ nach Behandlung der Kerne mit homogener Lösung berechnet.

k) Die Probenkerne wurden bei 90°C erneut getrocknet. Die Maßnahmen i) und j) wurden erneut durahgeführt. Der Vorgang wurde mehrfach wiederholt.

Die nachstehenden 5 Organopolysiloxanlösungen wurden in den Beispielen 1 bis 5 untersucht:

Tabelle I

| Lösung | % Wirkstoff in der Lösung | Wirkstoff | Lösemittel |
|---|---|---|---|
| 1 | 5 | aminofunktionelles Siliconöl der Formel X, wobei die Aminzahl 0,25, die Viskosität 200 und R = $CH_3$ beträgt | i-Propanol |
| 2 | 5 | Organopolysiloxan der Summenformel $CH_3Si(OC_2H_5)_{0,8}O_{1,1}$ mit einem durchschnittlichen Molekulargewicht von etwa 650 g/Mol und einer Viskosität von etwa 20 $mm^2/s$ bei 25°C | n-Hexan |
| 3 | 5 | 100 T eines Gemisches von Organopolysiliciumverbindungen, dessen Herstellung nachstehend beschrieben ist, und 1 T des Katalysators Di-n-butylzinndilaurat: in das obere Ende einer Reaktionskolonne wird ein Gemisch aus 92 Teilen Methyltrichlorsilan und 51 Teilen 2-Ethylhexyltrichlorsilan eingeleitet. Diesem Silangemisch wird etwa von der Mitte der Kolonne her ein Gemisch aus 47 Teilen Methanol und 5 Teilen Wasser entgegengeleitet. Aus dem oberen Ende der Kolonne wird Chlorwasserstoff, aus dem unteren Ende der Kolonne ein Gemisch von Organosiliciumverbindungen mit einer Viskosität von 3,5 bis 3,8 $mm^2.s^{-1}$ bei 25°C der Kolonne entnommen | n-Hexan |
| 4 | 5 | ein endblockiertes Methylhydrogenpolysiloxan mit einer Viskosität von ca. 20 $mm^2/s$ bei 25°C | n-Hexan |
| 5 | 5 | Kondensationsprodukt aus einem in den endständigen Einheiten je eine Si-gebundene Hydroxylgruppe aufweisenden a,w-Dihydroxy-methylpolysiloxan und N(-2-Aminoethyl)-3-aminopropyltrimethoxysilan in Gegenwart von KOH mit einer Aminzahl von etwa 0,3, einer Viskosität von etwa 1500 $mm^2/s$ bei 25°C und einem Restmethoxygehalt von weniger als 5 Mol-%, bezogen auf die anfangs im N(-2-Aminoethyl)-3-aminopropyl-trimethoxysilan vorhandenen Methoxygruppen. | n-Hexan |

* Festgehalt

EO-Einheit = $-(CH_2-CH_2-O)-$

Formel x: $RSiMe_2O\ [SiMe_2O]_m\ [SiMeR'O]_n\ SiMe_2R$

wobei $R' = (CH_2)_3\,NH-CH_2-CH_2-NH_2$

Die spontane Imbibition **Sw(sp)$_1$** nimmt bei den mit Organopolysiloxanlösungen behandelten Kernen nach einem Tag stark ab, da durch die Hydrophobierung der Kerne die kapillare Saugwirkung für Wasser stark herabgesetzt wird. Die hydrophobierende und wasserabweisende Wirkung bleibt über mehrere Tage erhalten.

In nachstehender Tabelle II sind die Werte für die spontane Imbibition **Sw(sp)$_1$** nach verschieden langen Trockenzeiten als Summe der Trockenzeiten bei Maßnahmen h) und k) im Vergleich zur Referenz **Sw(sp)$_{ref}$** angegeben.

Tabelle II

| Spontane Wasserimbibition Sw(sp)$_1$ nach Gesamttrockenzeit [Tage] | | | | | | | |
|---|---|---|---|---|---|---|---|
| **Beispiel** | **Lösung** | **Sw (Sp) ref** | **Sw (sp)1** | | | | |
| | | | **Tage: 1** | **3** | **4** | **5** | **14** |
| 1 | 1 | 0,55 | 0,03 | | 0,03 | | |
| 2 | 2 | 0,50 | 0,05 | 0,04 | | | |
| 3 | 3 | 0,50 | 0,05 | | | 0,03 | |
| 4 | 4 | 0,48 | 0,04 | | | 0,02 | 0,02 |
| 5 | 5 | 0,53 | 0,03 | | | 0,02 | 0,02 |

Beispiele 6 - 8

Die spontane Imbibition **Sw(sp)$_{ref}$** eines Probenkerns wurde analog den Beispielen 1 - 5 durch die Maßnahmen a) bis f) ermittelt. Danach wurden die nachstehenden Maßnahmen durchgeführt:

l) Die Probenkerne wurden analog Maßnahme b) mit Salzwasser getränkt. Das Salzwasser entspricht in etwa im Salzgehalt Formationswasser und enthält pro Liter 28,5 g NaCl, 18,5 g $CaCl_2$, 1,6 g $MgCl_2$ und 1,4 g KCl, insgesamt 5% Salzgehalt.
m) Je ein mit Salzwasser getränkter Probenkern wurde bei 110°C mit den Organopolysiloxanlösungen 2,4 bzw. 5 mit einer Rate von 10 ml/h bis zur Druckkonstanz geflutet. Etwa 3 Porenvolumina Organopolysiloxanlösung wurden dabei eingesetzt.
n) Die Probenkerne wurden bei 110°C 3 Tage lang aufbewahrt.
o) Die Probenkerne wurden durch langsame Druckabsenkung von 0,44 auf 0,1 MPa in 6 h und anschließendes 17stündiges Aufbewahren bei 90°C getrocknet und zur Bestimmung von $\mathbf{m_3}$ gewogen.
p) Analog Maßnahme d) wurden die trockenen Probenkerne in Filterpapierstreifen gewickelt und in Salzwasser gestellt. Nach sieben Stunden wurde der Kern ausgewickelt und zur Bestimmung von $\mathbf{m_{F3}}$ gewogen.
q) Nach der Gleichung

$$Sw(sp)_2 = \frac{m_{F3} - m_3}{m_v - m_1}$$

wurde die spontane Imbibition **Sw(sp)$_2$** berechnet.
r) Die Probenkerne wurden 17 h bei 90°C erneut getrocknet. Die Maßnahmen p) und q) wurden erneut durchgeführt. Der Vorgang wurde mehrfach wiederholt.

In nachstehender Tabelle III sind die Werte für die spontane Imbibition **Sw(sp)$_2$** nach verschieden langen Trokkenzeiten als Summe der Trockenzeiten bei Maßnahmen o) und r) im Vergleich zur Referenz **Sw(sp)$_{ref}$** angegeben.

Tabelle III

| Spontane Imbibition $S_w(sp)_{ref}$ und $Sw(sp)_2$ nach Gesamttrockenzeit [Tage] | | | | |
|---|---|---|---|---|
| **Beispiel** | **Lösung** | **Sw (Sp) ref** | **Sw (Sp)$^2$** | |
| | | | Tage: 1 | 5 |
| 6 | 2 | 0,50 | 0,12 | 0,10 |
| 7 | 4 | 0,55 | 0,04 | 0,03 |
| 8 | 5 | 0,48 | 0,06 | 0,04 |

Die spontane Imbibition mit Salzwasser **Sw(sp)$_2$** nimmt bei den mit Organopolysiloxanlösung behandelten Kernen auch nach Lage-rung bei hohen Temperaturen stark ab. Die kapillare Saugwirkung für Salzwasser unter Bedingungen, wie sie in Lagerstätten für Erdgas vorherrschen, wird stark herabgesetzt. Ein Verstopfen der Poren durch Salzausfällung findet nicht statt, der Gasfluß wird somit stabilisiert.
Beispiele 9 und 10 zur Reduktion des Wasserzuflusses und Verbesserung des Gasflusses wurden auf nachstehende Weise im angegebenen Zeitablauf durchgeführt:
Eine Hassler-Zelle wurde mit einem Kern aus trockenem Gildehauser Sandstein in der Dimension Länge 100 cm und Durchmesser 3 cm befüllt.
Der Kern wurde mit Stickstoff mit einer konstanten Fließgeschwindigkeit von 300 ml/h durchströmt. Der Differenzdruck $\Delta p_g$ zwischen dem Kerneingang und dem -ausgang wurde gemessen.
Die Gaspermeabilität $\mathbf{k_g}$ wurde nach der Darcy-Gleichung für kompressible Fluide (1) berechnet:

$$k_g = \frac{2Q_g \mu_g p_0 L}{A(p_1^2 - p_2^2)} \quad (1),$$

in der

$Q_g$ die Fließrate von Gas, $\mu_g$ die Viskositat von Gas, $p_0$ den aktuellen Atmosphärendruck, **L** die Kernlange, **A** die Kernquerschnittsfläche, $p_1$ den Injektionsdruck und $p_2$ den Kernausgangsdruck bedeuten. Die Gaspermeabilität $k_g$ ist nachstehend in Tabelle IV aufgeführt.

Der Kern wurde danach mit Wasser unter vermindertem Druck von 0,002 MPa im Exsikkator gesättigt, in eine Hassler-Zelle eingebaut und mit Wasser mit einer konstanten Fließgeschwindigkeit von 30 ml/h durchströmt. Der Differenzdruck $\Delta p_w$ zwischen dem Kerneingang und dem -ausgang wurde gemessen.

Die spezifische Wasserpermeabilität $k_w$ wurde nach der Darcy-Gleichung für inkompressible Fluide (2) berechnet:

$$k_w = \frac{2Q_w \mu_w L}{A(p_1 - p_2)} \quad (2),$$

in der

$Q_w$ die Fließrate von Wasser, $\mu_w$ die Viskosität von Wasser, und **L, A,** $p_1$ und $p_2$ die vorstehenden Bedeutungen aufweisen. Die spezifische Wasserpermeabilität $k_w$ ist nachstehend in Tabelle IV aufgeführt.

In den Kern wurden 20 Porenvolumina (PV) Siliconlösung 1 gemäß Tabelle I injiziert. Der Differenzdruck $\Delta p_e$ zwischen dem Kerneingang und dem -ausgang wurde gemessen. Der Widerstandsfaktor

$$RF = \Delta p_e / \Delta p_w$$

wurde als Maß für den Fließwiderstand berechnet und ist nachstehend in Tabelle IV aufgeführt.

Anschließend wurden in den Kern 20 Porenvolumina Wasser injiziert. Der Differenzdruck $\Delta p_{wr}$ zwischen dem Kerneingang und dem -ausgang wurde bei Anwesenheit der Lösung als Restphase gemessen. Der residuelle Widerstandsfaktor

$$RRF = \Delta p_{wr} / \Delta p_w$$

wurde als Maß für den residuellen Fließwiderstand berechnet und ist nachstehend in Tabelle IV aufgeführt.

Die RF-Werte betragen vor der Injektion definitionsgemäß 1. Während der Nachflutphase mit Wasser steigen die RRF-Werte kontinuierlich an. Der Anstieg der RRF-Werte ist nach der Zugabe von 20 Porenvolumina Wasser noch nicht beendet. Die Lösungen bauen einen dauerhaften Fließwiderstand für Wasser auf.

Siliconlösung 1 wurde nachstehend näher untersucht. Parallel zu diesen Untersuchungen wurde der Einfluß der residuellen Siliconöllösung 1 auf die Gaspermeabilität am gleichen Kern und Lösungssystem wie in Beispiel 9 wie für den Widerstandsfaktor Wasser untersucht.

Der trockene, in Tabelle V charakterisierte Kern wurde unter Vakuum von 0,002 MPa im Exsikkator mit Wasser gesättigt, in eine Hassler-Zelle eingebaut und mit Wasser bei einer konstanten Fließgeschwindigkeit von 30 ml/h durchströmt. Der Differenzdruck zwischen Kernein- und Kernausgang wurde gemessen und nach Gleichung (2) die Wasserpermeabilität bei 100% Wassersättigung bestimmt. Danach wurde das Wasser mit Gas bei einer Fließgeschwindigkeit von 3 l/h verdrängt bis sich eine Restwassersättigung zwischen 10 und 15% des Porenvolumens eingestellt hatte. Die verdrängte Wasserphase wurde gesammelt, und aus der Volumenbilanz zwischen ursprünglicher Wassermenge und der verdrängten Wassermenge wurde die Restwassersättigung nach Gleichung (3) bestimmt:

$$S_{wr} = \frac{V_{wi}-V_{wp}}{V_{wi}} \qquad (3),$$

in der

$V_{wi}$ ursprünglich im Kern befindliches Wasservolumen und
$V_{wp}$ produziertes Wasservolumen bedeuten.

Anschließend wurde bei einer Fließgeschwindigkeit von 300 ml/h für Gas der Differenzdruck zwischen Kernein- und Kernausgang bestimmt und die Gaspermeabilität bei Restwassersättigung nach Formel (1) berechnet.

Der Kern wurde darauf mit 20 PV Siliconöllösung bei einer Fließgeschwindigkeit von 30 ml/h geflutet und die Siliconöllösung durch Gas bei einer Fließgeschwindigkeit von 3 l/h verdrängt, bis sich eine restliche Sättigung mit Siliconöllösung zwischen 10 und 15% des Porenvolumens einstellte. Die Sättigungsbestimmung erfolgte in gleicher Weise wie bei der Verdrängung des Wassers durch Gas nach Gleichung (3).

Darauf wurde die Gaspermeabilität des behandelten Kerns in gleicher Weise wie die bei Restwassersättigung gemessene bestimmt. In der Tabelle V ist ein Vergleich der Gaspermeabilität bei Restwasser- und bei restlicher Sättigung mit Siliconöllösung dargestellt. Die hier verwendete relative, d.h. dimensionslose Gaspermeabilität ist das Verhältnis von der Gaspermeabilität bei Restwasser- bzw. restlicher Sättigung mit Siliconöllösung zur spezifischen Gaspermeabilität des Kerns. Es tritt ein Anstieg der Gaspermeabilität auf.

Tabelle IV

| | | | | RF-Werte bei injizierten Porenvolumina Siloxanlösung | | | | RRF-Werte bei injizierten Porenvolumina Wasser | | | |
|---|---|---|---|---|---|---|---|---|---|---|---|
| | Kernmaterial Gildehauser Sandstein | | | | | | | | | | |
| Beispiel 9 Siloxanlösung 1 | Porosität | Gaspermeabilität $k_g$ [µm²] | Wasserpermeabilität $k_w$ [µm²] | 5 | 10 | 15 | 20 | 5 | 10 | 15 | 20 |
| 1 | 0,231 | 2,95 | 2,71 | 2,34 | 2,60 | 2,60 | 2,86 | 4,17 | 5,73 | 7,29 | 8,59 |

Tabelle V

| Beispiel 10 Siloxanlösung | Kernmaterial: Porosität | Gildehauser Sandstein Spez. Gaspermeabilität kg ($\mu m^2$) | Restwasser-sättigung $S_{wr}$ % | Relative Gas-permeabilität % | Restliche Sättigung mit Siloxanlösung % | Relative Gas permeabilitä |
|---|---|---|---|---|---|---|
| 1 | 0,231 | 2,95 | 14 | 0,70 | 14 | 0,84 |

## Patentansprüche

1. Verfahren zur Behandlung von wasserhaltigen Erdgas- und Erdgasspeicherbohrungen, bei dem eine homogene Phase, enthaltend einen wasserabweisenden, solvolysebeständigen Wirkstoff in das wasserführende Gestein injiziert wird.

2. Verfahren nach Anspruch 1, bei dem als wasserabweisender Wirkstoff Organosiliciumverbindungen eingesetzt werden.

3. Verfahren nach Anspruch 2, bei dem die Organosiliciumverbindungen Einheiten der allgemeinen Formel I

$$A_aR_bSiX_cO_{[4-(a+b+c)]/2} \quad (I),$$

enthalten, wobei

**R** ein Wasserstoffatom oder einen einwertigen, zweiwertigen oder dreiwertigen Kohlenwasserstoffrest mit 1 bis 200 Kohlenstoffatomen, der mit Halogen-, Amin-, Ammonium-, Mercapto-, Acrylat- oder Maleinimidgruppen substituiert sein kann,

**X** ein Chloratom, einen Rest der Formel $-O^-$, wobei als Ausgleich der Ladungen Protonen und/oder organische bzw. anorganische ionische Substanzen vorhanden sein können, ei-nen Rest der allgemeinen Formel $-OR^1$ oder einen Rest der allgemeinen Formel II

$$-(R^2)_h-[OCH(CH_3)CH_2]_e[OCH_2CH_2]_f[O(CH_2)_4]_gOR^3 \quad (II),$$

wobei

**$R^1$** ein Wasserstoffatom oder einen Kohlenwasserstoffrest mit 1 bis 200 Kohlenstoffatomen, der durch ein oder mehrere gleiche oder verschiedene Heteroatome, die ausgewählt werden aus O, S, N und P, unterbrochen sein kann,

**$R^2$** einen zweiwertigen Kohlenwasserstoffrest mit 1 bis 200 Kohlenstoffatomen, der durch ein oder mehrere Gruppen der Formeln -C(O)-, -C(O)O-, $-C(O)NR^1$, $-NR^1-$, $-N^+HR^1-$, -O-, -S- unterbrochen und/oder mit F, Cl oder Br substituiert sein kann,

**$R^3$** eine Bedeutung von **$R^1$** haben kann, oder einen Rest der Formeln $-C(O)R^1$ oder $-Si(R^1)_3$,

**A** einen Rest der allgemeinen Formel IV

$$-R^4(B)_z \quad (IV),$$

wobei

**$R^4$** einen zwei- drei- oder vierwertigen Kohlenwasserstoffrest mit 1 bis 200 Kohlenstoffatomen je Rest, der durch ein oder mehrere Gruppen der Formeln -C(O)-, -C(O)O-, $-C(O)NR^5$, $-NR^5-$, $-N^+HR^5-$, $-N^+R^5R^5-$, -O-, -S-, -(HO)P(O)- oder -(NaO)P(O)- unterbrochen und/oder mit F, Cl oder Br substituiert sein kann, wobei

**$R^5$** ein Wasserstoffatom oder einen Kohlenwasserstoffrest mit 1 bis 200 Kohlenstoffatomen je Rest, der durch ein oder mehrere Gruppen der Formeln -C(O)-, -C(O)O-, $-C(O)NR^5-$, $-NR^5-$, $-N^+HR^5-$, $-N^+R^5R^5-$, -O- oder -S- unterbrochen und/oder mit F, Cl oder Br substituiert sein kann,

**B** eine Bedeutung von **$R^5$** haben kann oder einen Rest, der ausgewählt wird aus $-COO^-$, $-SO_3^-$, $-OPO_3H_Y^{(2-y)}-$, $-N^+R^5R^5R^5$, $-P^+R^5R^5R^5$, $-NR^5R^5$, -OH, -SH, F, Cl, Br, -C(O)H, -COOH, $-SO_3H$, $-C_6H_4-OH$ und $-C_mF_{2m+1}$,

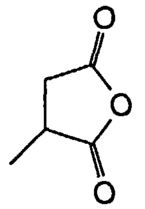
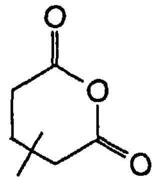
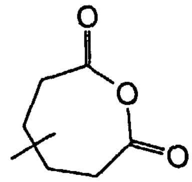

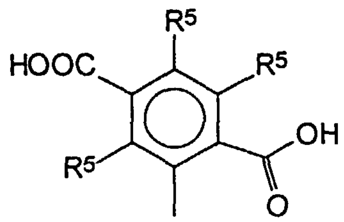

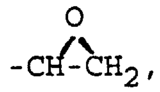

$-C(O)-CR^1=CH_2$, $-O-C(O)-CR^1=CH_2$,

$-C_6H_4-(CH_2)_x-CR^1=CH_2$,

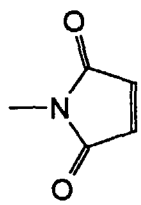
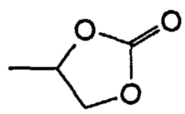
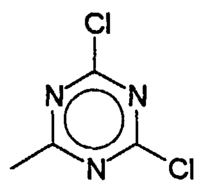

| | |
|---|---|
| **x** | eine ganze Zahl von 1-20, |
| **y** | die Werte 0 oder 1, |
| **z** | je nach Wertigkeit von $\mathbf{R^4}$ die Werte 1, 2 oder 3, |
| **h** | die Werte 0 oder 1, |
| **m** | eine ganze Zahl von 1-20, |
| **a, b und c** | jeweils die Werte 0, 1, 2 oder 3, und die Summe **a + b + c** < 4 und |
| **e, f und g** | jeweils eine ganze Zahl von 0-200 bedeuten, mit der Maßgabe, daß die Summe **e + f + g** > 1 ist. |

**4.** Verfahren, nach Anspruch 1 bis 3, bei dem die Organosiliciumverbindungen Einheiten der allgemeinen Formeln (V) und (VI) enthalten,

$$O_{(4-i-k-1)/2}R_iX_kSi\text{-}A^1\text{-}SiX_kR_iO_{(4-i-k-1)/2} \qquad (V),$$

$$O_{(4-i-k-1)/2}R_iX_kSi-\underset{\displaystyle SiX_kR_iO_{(4-i-k-1)/2}}{\underset{|}{A^2}}-SiX_kR_iO_{(4-i-k-1)/2} \quad (VI),$$

wobei

**$A^2$** einen dreiwertigen Kohlenwasserstoffrest mit 1 bis 200 Kohlenstoffatomen bedeutet, der durch Reste der Formeln -C(O)-, -C(O)O-, -C(O)NR$^5$, -NR$^5$-, -N$^+$HR$^5$-, -N$^+$R$^5$R$^5$-, -O-, -S-, -N- oder -N$^+$R$^5$- unterbrochen und/oder mit F, Cl oder Br substituiert sein kann,

**$A^1$** einen zweiwertigen Rest **$R^2$** darstellt,

**i** und **k** jeweils die Werte 0, 1, 2 oder 3 bedeuten, mit der Maßgabe **i** + **k** $\leq$ 3 und

**R** und **X** die in Anspruch 3 angegebenen Bedeutungen haben.

**5.** Verfahren nach Anspruch 1 bis 4, bei dem die homogene Phase Lösemittel enthält, welche bei 20 °C höchstens mit 2 Gew.-% Wasser mischbar sind.

Europäisches Patentamt

# EUROPÄISCHER RECHERCHENBERICHT

Nummer der Anmeldung
EP 98 11 6157

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | WO 98 27314 A (WACKER CHEMIE) 25. Juni 1998<br>* Seite 3, Zeile 5 - Seite 7, Zeile 30 *<br>--- | 1-3 | E21B33/138<br>E21B43/25 |
| X | DATABASE WPI<br>Section Ch, Week 9235<br>Derwent Publications Ltd., London, GB;<br>Class E11, AN 92-290715<br>XP002084777<br>& SU 1 680 949 A (SIBE OIL IND INST)<br>, 30. September 1991<br>* Zusammenfassung *<br>--- | 1,2 | |
| X | DATABASE WPI<br>Section Ch, Week 8125<br>Derwent Publications Ltd., London, GB;<br>Class A26, AN 81-45427D<br>XP002084778<br>& SU 767 152 B (KOVARDAKOV V A)<br>, 30. September 1980<br>* Zusammenfassung *<br>--- | 1,2 | RECHERCHIERTE SACHGEBIETE (Int.Cl.6) |
| X | US 5 346 013 A (G. PUSCH)<br>13. September 1994<br>* Spalte 1, Zeile 47 - Zeile 58; Anspruch 1 *<br>* Spalte 4, Zeile 27 - Zeile 34 *<br>* Spalte 6, Zeile 10 - Zeile 25 *<br>--- | 1,5 | E21B |
| A | US 4 425 242 A (G.S. PENNY)<br>10. Januar 1984<br>* Spalte 1, Zeile 40 - Spalte 2, Zeile 2 *<br>* Spalte 5, Zeile 4 - Zeile 16 *<br>---<br>-/-- | 1,5 | |

Der vorliegende Recherchenbericht wurde für alle Patentansprüche erstellt

| Recherchenort | Abschlußdatum der Recherche | Prüfer |
|---|---|---|
| DEN HAAG | 18. November 1998 | Hilgenga, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 98 11 6157

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| A | DATABASE WPI<br>Section Ch, Week 9719<br>Derwent Publications Ltd., London, GB;<br>Class A26, AN 97-211347<br>XP002084779<br>& RU 2 066 734 C (STROGANOV V M)<br>, 20. September 1996<br>* Zusammenfassung *<br>--- | 1,2 | |
| A | DATABASE WPI<br>Section Ch, Week 8206<br>Derwent Publications Ltd., London, GB;<br>Class E11, AN 82-11187E<br>XP002084780<br>& SU 821 686 B (SIBE OIL IND RES)<br>, 15. April 1981<br>* Zusammenfassung *<br>----- | 1,2 | |
| | | | RECHERCHIERTE SACHGEBIETE (Int.Cl.6) |

Der vorliegende Recherchenbericht wurde für alle Patentansprüche erstellt

| Recherchenort | Abschlußdatum der Recherche | Prüfer |
|---|---|---|
| DEN HAAG | 18. November 1998 | Hilgenga, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)